**Europäisches Patentamt**

**European Patent Office**

**Office européen des brevets**

(19)

(11) - Numéro de publication : **0 093 634**
**B1**

(12)

# FASCICULE DE BREVET EUROPÉEN

(45) Date de publication du fascicule du brevet :
23.03.88

(21) Numéro de dépôt : 83400754.4

(22) Date de dépôt : 15.04.83

(51) Int. Cl.⁴ : **F 16 D   3/00**, F 16 D   3/76,
**F 16 D   3/32**

(54) **Double joint de cardan avec élément élastique de transmission de couple.**

(30) Priorité : 30.04.82 FR 8207571

(43) Date de publication de la demande :
09.11.83 Bulletin 83/45

(45) Mention de la délivrance du brevet :
23.03.88 Bulletin 88/12

(84) Etats contractants désignés :
DE GB IT SE

(56) Documents cités :
FR-A- 1 215 423
FR-A- 1 561 619
FR-A- 2 167 265
FR-A- 2 212 871
FR-A- 2 402 803
FR-A- 2 482 223
GB-A-   459 105
GB-A- 2 057 632
GB-A- 2 070 737
US-A- 3 137 148

(73) Titulaire : **NACAM Société dite:**
**Route de Blois**
**F-41100 Vendome (FR)**

(72) Inventeur : **Haldric, Bernard**
**15 Rue Charles Lindberg**
**F-41100 Vendome (FR)**
Inventeur : **Baudon, Sylvie née Chardon**
**19 Rue Pierre Brossolette**
**F-41100 Vendome (FR)**

(74) Mandataire : **Moncheny, Michel et al**
**c/o Cabinet Lavoix 2 Place d'Estienne d'Orves**
**·F-75441 Paris Cedex 09 (FR)**

## Description

La présente invention concerne les joints de cardan et se rapporte plus particulièrement aux joints de cardan comprenant une liaison élastique de transmission de couple.

On a décrit au FR-A-2 167 265, un assemblage d'une mâchoire de joint de cardan avec un arbre, dans lequel l'arbre est engagé à l'intérieur d'un manchon en élastomère comprimé radialement au contact de la paroi de l'extrémité de la mâchoire formant moyeu.

Un assemblage du même genre est décrit au GB-A-2 057 632, cet assemblage comportant un manchon tubulaire extérieur, un manchon tubulaire intérieur destiné à recevoir un arbre et un manchon en élastomère comprimé radialement entre les manchons extérieur et intérieur.

Le GB-A-459 105 décrit lui aussi l'emploi d'un manchon en élastomère assurant la liaison entre un tube portant une mâchoire de joint de cardan et un arbre tubulaire extérieur.

Grâce à de tels agencements connus, on obtient un amortissement des vibrations entre l'arbre et la mâchoire et, par conséquent entre l'arbre et l'autre arbre normalement accouplé avec la mâchoire conjuguée du joint de cardan.

Cependant, pour que la transmission de couple par l'intermédiaire du manchon en élastomère soit assurée dans de bonnes conditions, il est nécessaire que ce manchon soit en contact d'une part avec la paroi du moyeu de la mâchoire et d'autre part avec l'extrémité de l'arbre correspondant, sur une longueur relativement importante, ce qui accroît l'encombrement en longueur de l'ensemble.

En outre, l'extrémité de l'arbre engagé dans le manchon en élastomère doit présenter une forme particulière destinée à empêcher la rotation relative de l'arbre et du manchon, ce qui implique un façonnage de l'extrémité de l'arbre.

Par ailleurs, dans un agencement du type décrit au brevet français, la présence d'un manchon élastique entre un arbre et le moyeu de la mâchoire du joint de cardan associée à celui-ci a des effets différents sur les deux mâchoires du joint, notamment en ce qui concerne l'amortissement des vibrations et la suppression du bruit, de sorte que pour obtenir un système homogène, il est nécessaire de prévoir un manchon en élastomère dans les moyeux des deux mâchoires.

Il en résulte un accroissement du prix de revient de l'ensemble.

On a déjà proposé pour des applications du secteur de l'automobile d'interposer un manchon élastique en caoutchouc ou en élastomère, entre un élément menant et un élément mené tous deux entraînés en rotation afin d'amortir des vibrations. Le brevet GB-A-459 105 propose une solution pour un arbre de transmission tubulaire et les brevets FR-A-2 167 265 et GB-A-2 057 632 proposent des solutions pour des joints de cardan simples dans lesquels les mâchoires sont obtenues par roulage et soudage d'un flan de tôle découpée.

Pour remédier à une interruption de la transmission du couple entre éléments menant et mené qui résulterait de la défaillance du manchon élastique interposé entre eux du fait de sa rupture ou de sa désolidarisation, le brevet GB-A-2 057 632 propose d'intercaler entre ces éléments un dispositif normalement inopérant qui ne devient actif qu'à la survenance d'une défaillance du manchon. Ce dispositif est constitué de parties complémentaires, les unes solidaires de l'élément menant et les autres de l'élément mené, qui coopèrent seulement en cas de défaillance du manchon élastique pour transmettre directement le couple. Si l'on veut obtenir une sécurité absolue, il est nécessaire d'utiliser deux tels dispositifs, un pour l'élément mené et un pour l'élément menant ce qui augmente les coûts de fabrication et de montage et accroît l'encombrement au voisinage des extrémités des éléments proches du joint de cardan.

Le brevet FR-A-2 402 803 concerne un joint de cardan double à rotule dont les mâchoires sont obtenues par roulage et soudage d'un flan de tôle découpé et dont deux d'entre elles sont solidaires d'un organe de liaison intermédiaire en une partie. Ce brevet vise à rendre un tel joint homocinétique sans évoquer les problèmes de l'amortissement des vibrations et de la continuité de la transmission du couple.

L'invention vise à remédier aux inconvénients précités en créant un joint de cardan qui, tout en présentant un encombrement notamment longitudinal réduit, permette d'assurer des transmissions de couple avec un amortissement efficace des vibrations.

L'invention a pour objet un double joint de cardan constitué de deux mâchoires d'extrémité reliées chacune par un croisillon à une mâchoire correspondante faite chacune à partir d'un flan de tôle roulée et soudée ou d'un tube de manière à former chacune, venue de matière, respectivement l'une et l'autre des parties extérieure et intérieure d'un organe de liaison intermédiaire qui sont reliées l'une à l'autre par un élément élastique interposé entre elles et qui sont munies de moyens de butée pour limiter leur rotation relative. Ce double joint de cardan est caractérisé en ce que ces moyens de butée en rotation sont constitués par au moins un prolongement axial prévu sur la partie intérieure et destiné à venir en butée avec une branche de la mâchoire de la partie extérieure lorsque le couple à transmettre par l'élément élastique dépasse une valeur prédéterminée.

D'autres caractéristiques et avantages de l'invention apparaîtront au cours de la description qui va suivre, donnée uniquement à titre d'exemple et faite en se référant aux dessins annexés, sur lesquels :

la Fig. 1 est une vue en élévation et en demi-coupe du double joint de cardan suivant l'invention ;

la Fig. 2 est une vue en demi-coupe suivant la ligne 2-2 de la Fig. 1 ;

la Fig. 3 est une vue de dessus avec demi-coupe partielle du joint de cardan de la Fig. 1 ;

la Fig. 4 est une demi-coupe suivant la ligne 4-4 de la Fig. 1 montrant la forme du palier relais du double joint de cardan.

la Fig. 5 est une vue en élévation et en demi-coupe d'un autre mode de réalisation du double joint de cardan suivant l'invention ;

la Fig. 6 est une vue en demi-coupe suivant la ligne 6-6 de la Fig. 5 ; et

la Fig. 7 est une vue de dessus avec demi-coupe partielle du double joint de cardan de la Fig. 5.

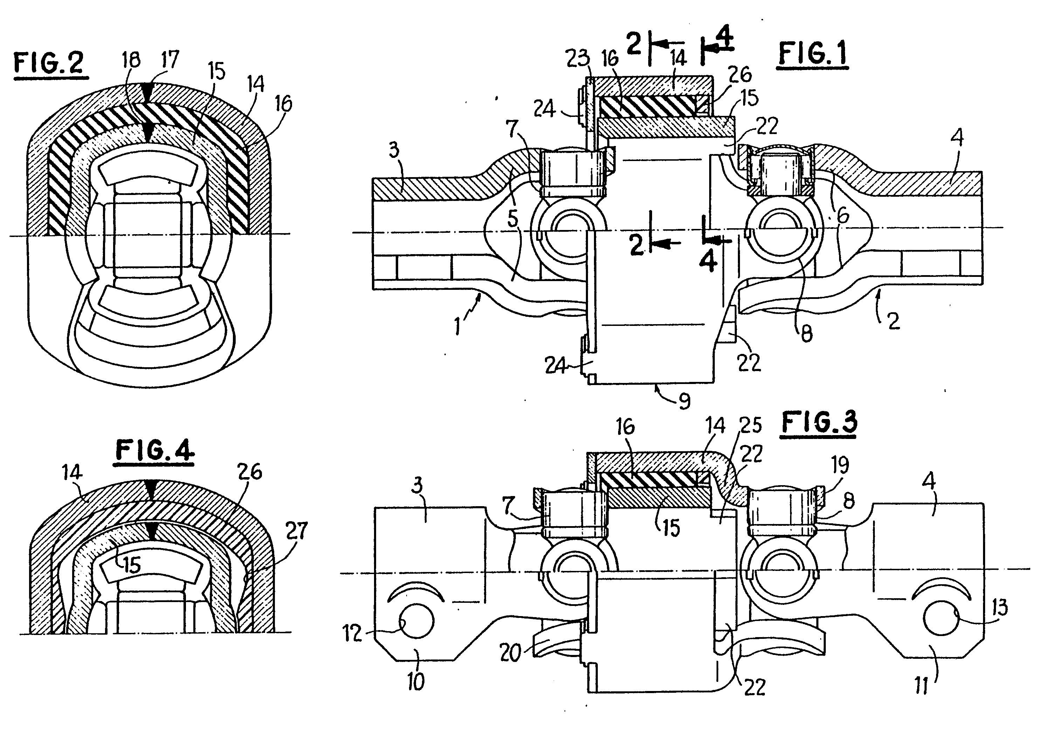

Le double joint de cardan représenté aux Fig. 1 à 4, comporte principalement une première et une seconde mâchoires 1 et 2 qui comportent chacune un moyeu 3, 4 de liaison avec un arbre correspondant non représenté et des branches respectives 5, 6 au moyen desquelles elles sont reliées par des croisillons 7, 8 à un organe de liaison intermédiaire 9.

Ainsi qu'on peut le voir à la Fig. 3, les moyeux 3 et 4 des mâchoires 1 et 2 sont des moyeux fendus formant colliers de serrage en vue de la fixation des mâchoires sur les arbres correspondants et présentant des pattes latérales respectives 10, 11 percées d'orifices 12, 13 pour le passage de boulons de serrage non représentés.

Les mâchoires 1 et 2 sont avantageusement réalisées en tôle d'acier épaisse découpée et roulée.

L'organe de liaison intermédiaire 9 est réalisé en deux parties 14, 15 disposées coaxialement et reliées entre elles par un élément élastique 16 constitué par un manchon en élastomère. Chacune des parties 14 et 15 de l'organe de liaison intermédiaire 9 est réalisée en tôle roulée et soudée. Les cordons de soudure des parties 14 et 15 sont représentés respectivement en 17 et 18 sur la Fig. 2.

Ainsi qu'on peut le voir plus clairement à la Fig. 3, les parties 14 et 15 de l'organe de liaison intermédiaire 9 définissent chacune des mâchoires 19, 20 dans les alésages transversaux desquelles sont engagés respectivement des tourillons des croisillons 8 et 7 dont les autres tourillons coopèrent avec les branches 6 et 5 des mâchoires 1 et 2.

Afin que les branches des mâchoires 19 et 20 de l'organe de liaison intermédiaire 9 se trouvent alignées, les branches de la mâchoire 19 portées par la partie extérieure 14 sont pincées vers l'intérieur.

La section transversale des parties extérieure et intérieure 14, 15 est relativement importante par rapport à la section transversale du reste du joint. Ainsi, on obtient une surface de contact entre les parties extérieure et intérieure 15 et le manchon en élastomère 16 adaptée à la valeur du couple maximum à transmettre à l'aide du joint de cardan.

Bien entendu, le manchon en élastomère 16 peut être fixé aux parties extérieure 14 et intérieure 15 par adhérisation de ses surfaces extérieure et intérieure aux surfaces correspondantes de ces parties.

Il peut également être fixé par adhérisation de l'une de ses surfaces à la partie correspondante 14 ou 15 avec laquelle il est en contact et être emmanché à force dans l'autre partie. Enfin, il peut être simplement serré entre les parties 14 et 15. Ainsi qu'on peut le constater notamment à la Fig. 2, les parties extérieure 14 et intérieure 15 de l'organe de liaison intermédiaire du joint de cardan suivant l'invention présentent des sections transversales non circulaires, en forme de rectangle curviligne, par exemple.

L'extrémité de la partie intérieure 15 de l'organe de liaison intermédiaire 9 opposée à la mâchoire 20 présente des prolongements axiaux 22 diamétralement opposés, formant butées en rotation pour la partie intérieure 15 par rapport à la partie extérieure 14 et destinés à coopérer avec les bords des branches de la mâchoire 19 de la partie extérieure 14.

Il est également possible de ne prévoir qu'un seul de ces prolongements axiaux.

Les prolongements 22 formant butées en rotation ont pour fonction, selon le choix de leur position angulaire sur la partie intérieure 15 par rapport aux bords correspondants des branches de la mâchoire de la partie extérieure, de limiter le couple transmis par le manchon en élastomère 16 à une valeur prédéterminée.

Ils peuvent également être disposés dans des positions correspondant aux limites de la capacité de transmission de couple du manchon 16.

Ainsi, lorsque le couple à transmettre par le joint de cardan atteint une valeur prédéterminée ou bien devient tel qu'il entraîne une déformation trop importante du manchon en élastomère 16, la partie intérieure 15 vient en prise par l'intermédiaire de ces saillies 22 avec la partie extérieure 14, de sorte qu'il y a transmission du couple par entraînement de pièces métalliques entre elles. On évite ainsi la destruction du manchon en élastomère sous l'effet d'un couple trop important.

Du côté de la mâchoire 20 portée par la partie intérieure 15, la partie extérieure 14 comporte une pièce annulaire 23 formant butée axiale fixée à l'aide de pattes rabattues ou écrasées 24 prévues sur la partie extérieure 14.

La butée axiale 23 qui se trouve en regard de l'extrémité correspondante de la partie intérieure 14 permet d'éviter un déplacement relatif de la partie intérieure 15 par rapport à la partie extérieure 14 dans le sens de l'éloignement des croisillons 7 et 8.

Les déplacements relatifs de ces deux parties 14 et 15 dans le sens contraire sont empêchés de la même façon par les épaulements 25 résultant du pincement des branches de la mâchoire 19 de la partie extérieure 14. On est ainsi assuré que le manchon 16 reste en prise avec les deux parties 14 et 15 de l'organe de liaison intermédiaire. Comme représenté aux Fig. 1, 2 et 4, à l'une des extrémités du manchon en élastomère 16 est prévue une pièce annulaire 26 en matériau rigide, en matière plastique par exemple, formant palier relais résistant aux effets de couple complémentaire qui apparaît lorsque le double joint de cardan transmet de forts couples sous des angles de transmission importants.

La pièce annulaire 26 est fixée par exemple par adhérisation à une extrémité du manchon 16 avec un léger jeu par rapport à la partie intérieure 15 de l'organe de liaison 9.

Compte tenu de la forme des parties 14 et 15 de l'organe de liaison, la pièce annulaire 26 présente des dégagements 27 représentés à la Fig. 4 qui permettent un déplacement angulaire relatif des parties extérieure et intérieure 14 et 15.

Les dégagements 27 forment également des butées dont le rôle est analogue à celui des prolongements axiaux 22 qu'il est alors possible de supprimer.

Dans les conditions de transmission de fort couple sous un angle important indiquées plus haut, la partie extérieure 14 tend à se déplacer par rapport à la partie intérieure 15 de manière que leurs axes ne sont plus confondus, ce qui entraîne une déformation axiale du manchon 16. Le palier relais 26 empêche cette déformation axiale et assure donc le maintien du manchon 16 en contact avec les parties 14 et 15 sur toute sa longueur.

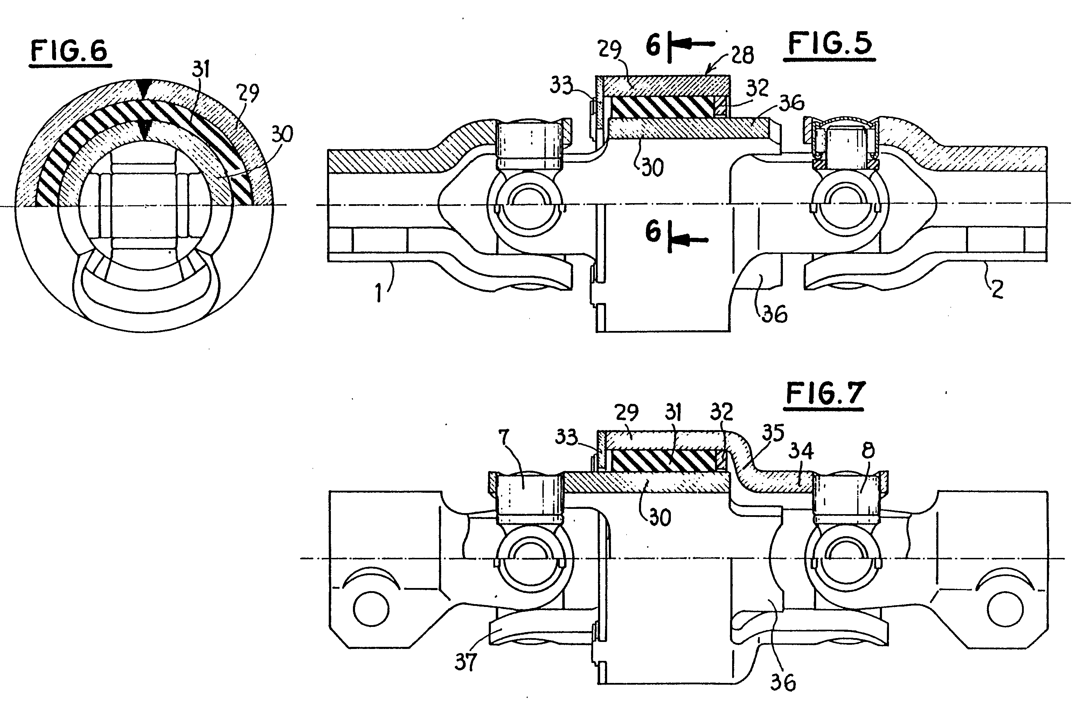

Le double joint de cardan représenté aux Fig. 5 à 7 est semblable à celui décrit en référence aux Fig. 1 à 4 à l'exception près qu'il comporte un organe de liaison intermédiaire 28 dont les parties extérieure 29 et intérieure 30 sont de forme cylindrique.

Dans l'exemple représenté, les parties 29 et 30 sont réalisées en tôle roulée et soudée.

Elles peuvent également être réalisées à partir de tubes de sections correspondantes.

Les parties 29 et 30 sont reliées entre elles par un manchon en élastomère 31 également cylindrique, soit fixé aux faces correspondantes des parties 29 et 30 par adhérisation, soit fixé à l'une de ces pièces par adhérisation et emmanché à force sur ou dans l'autre.

Comme le précédent, le double joint de cardan représenté aux Fig. 5 à 7 comporte une pièce annulaire 32 de forme circulaire, formant palier relais résistant aux effets de couple complémentaire.

Par ailleurs, le double joint de cardan des Fig. 5 à 7 est de construction analogue à celui des Fig. 1 à 4.

Il comporte comme ce dernier, une première butée axiale 33 constituée par une pièce annulaire fixée à l'extrémité de la partie extérieure 29 opposée à sa mâchoire 34 et des secondes butées axiales 35 formées par les épaulements de la mâchoire 34 de la partie extérieure 29.

La partie intérieure 30 comporte des prolongements 36 formant butées angulaires, coopérant avec les branches correspondantes de la mâchoire 34 de la pièce extérieure 29 et dont le rôle est le même que celui des organes correspondants du double joint de cardan des Fig. 1 à 4.

Le double joint de cardan qui vient d'être décrit présente vis à vis des joints de type connu comportant un élément élastique de transmission de couple, l'avantage d'un relativement faible encombrement axial. En outre, le double joint de cardan suivant l'invention, du fait qu'il comporte une pièce élastique de transmission de couple dans l'organe de liaison intermédiaire, peut être fixé à l'aide de moyens de fixation classiques communs à un grand nombre de joints de cardan ordinaires.

Le fait que l'organe élastique 16 se trouve dans une partie intermédiaire du joint de cardan double assure un fonctionnement équilibré de celui-ci, notamment en ce qui concerne les effets d'amortissement des vibrations transmises aux deux mâchoires d'extrémité du joint.

Enfin, la présence de la sécurité de transmission de couple constituée par les saillies axiales de la partie intérieure de l'organe de liaison intermédiaire assure au double joint de cardan suivant l'invention et en particulier au manchon en élastomère reliant les parties extérieure et intérieure de celui-ci, une grande longévité.

Le double joint de cardan qui vient d'être décrit est un joint à mâchoires pourvues de moyeux de fixation fendus. On comprendra toutefois que l'invention s'applique également à des doubles joints de cardan pourvus de moyens de fixation différents.

Dans les modes de réalisation décrits en référence aux dessins, le double joint de cardan comporte un palier relais monté à une extrémité du manchon en élastomère avec un léger jeu par rapport à la partie intérieure de l'organe de liaison intermédiaire.

Cependant, il est également possible de prévoir deux paliers relais fixés chacun à une extrémité du manchon en élastomère. De plus, le jeu peut être prévu par rapport à la partie extérieure.

**Revendications**

1. Double joint de cardan constitué de deux mâchoires d'extrémité (1, 2) reliées chacune par un croisillon (7, 8) à une mâchoire correspondante (19, 20 ; 34, 37) faite chacune à partir d'un flan de tôle roulée et soudée ou d'un tube de manière à former chacune, venue de matière, respectivement l'une et l'autre des parties extérieures (14, 29) et intérieure (15, 30) d'un organe de liaison intermédiaire (9) qui sont reliées l'une à l'autre par un élément élastique (16 ; 31) interposé entre elles et qui sont munies de moyens de butée (22, 27 ; 36) pour limiter leur rotation relative, caractérisé en ce que ces moyens de butée en rotation sont constitués par au moins un prolongement axial (22 ; 36) prévu sur la partie intérieure (15 ; 30) et destiné à venir en butée avec une branche de la mâchoire (19 ; 34) de la partie extérieure (14 ; 29) lorsque le couple à transmettre par l'élément élastique dépasse une valeur prédéterminée.

2. Double joint de cardan suivant la revendication précédente, caractérisé en ce qu'il comporte des moyens de butée axiale (24, 25 ; 33, 35) destinés à empêcher les déplacements relatifs axiaux des parties intérieure (14 ; 29) et extérieure (15 ; 30).

3. Double joint de cardan suivant la revendication 2, caractérisé en ce que l'un des moyens de butée axiale est constitué par une pièce annulaire (24 ; 33) montée à l'extrémité de la partie extérieure (14 ; 29) de l'organe de liaison (9 ; 28) opposée à sa mâchoire (19 ; 34), ladite pièce annulaire (24 ; 33) se trouvant en regard de l'extrémité correspondante de la partie intérieure (15 ; 30).

4. Double joint de cardan suivant l'une des revendications 2 et 3, caractérisé en ce que l'autre côté desdits moyens de butée axiale est constitué par des épaulements (25 ; 35) des branches de la mâchoire (19 ; 34) de la partie extérieure (14 ; 29) qui se trouvent en regard de l'extrémité correspondante de la partie intérieure (15 ; 30).

5. Double joint de cardan suivant l'une quelconque des revendications précédentes, caractérisé en ce qu'il comporte en outre au moins un palier relais (26 ; 32) résistant aux efforts de couple complémentaire, constitué par une pièce annulaire rigide disposée entre la partie extérieure (14 ; 29) et la partie intérieure (15 ; 30) de l'organe de liaison intermédiaire (9 ; 28), fixée à au moins une extrémité de l'élément élastique (16, 31) avec un léger jeu avec l'une desdites parties intérieure ou extérieure.

6. Double joint de cardan suivant la revendication 5, caractérisé en ce que pour un organe de liaison (9) de section non circulaire, la pièce annulaire (26) formant palier relais comporte des dégagements (27) permettant un déplacement angulaire limité à la partie intérieure (15) par rapport à la partie extérieure (14).

## Claims

1. Double universal joint comprising two end yokes (1, 2) each connected by a crosspiece (7, 8) to a corresponding yoke (19, 20 34, 37), each formed from a sheet metal blank which has been rolled and welded or from a tube so as to form, in one piece therewith, the one and the other of the outer parts (14, 29) and inner parts (15, 30), respectively, of an intermediate connecting means (9) which are connected to one another by an elastically yieldable element (16 ; 31) interposed between them and which are provided with abutment means (22, 27 ; 36) to limit their relative rotation, characterised in that these rotation abutment means consist of at least one axial extension (22 ; 36) provided on the inner part (15 ; 30) and adapted to abut against a branch of the yoke (19 ; 34) of the outer part (14 ; 29) when the torque to be transmitted by the elastically yieldable element exceeds a predetermined value.

2. Double universal joint according to the preceding claim, characterised in that it comprises axial abutment means (24, 25 ; 33, 35) for preventing relative axial displacements of the inner part (14 ; 29) and outer part (15 ; 30).

3. Double universal joint according to claim 2, characterised in that one of the axial abutment means consists of an annular member (24 ; 33) mounted on the end of the outer part (14 ; 29) of the connecting means (9 ; 28) remote from the yoke (19 ; 34) thereof, said annular member (24 ; 33) being arranged opposite the corresponding end of the inner part (15 ; 30).

4. Double universal joint according to one of claims 2 and 3, characterised in that the other side of the axial abutment means consists of shoulders (25 ; 35) on branches of the yoke (19 ; 34) of the outer part (14 ; 29) which are located opposite the corresponding end of the inner part (15 ; 30).

5. Double universal joint according to any one of the preceding claims, characterised in that it further comprises at least one relay bearing (26 ; 32) which resists complementary torque forces, and consists of a rigid annular member disposed between the outer part (14 ; 29) and the inner part (15 ; 30) of the intermediate connecting means (9 ; 28), fixed to at least one end of the elastically yieldable element (16 ; 31) with a slight clearance between itself and one of the above-mentioned inner or outer parts.

6. Double universal joint according to claim 5, characterised in that, for a connecting means (9) of non-circular cross-section, the annular member (26) forming the relay bearing comprises recesses (27) which permit limited angular displacement of the inner part (15) relative to the outer part (14).

## Patentansprüche

1. Doppelkardangelenk, welches aus zwei Endgabeln (1, 2) gebildet ist, von denen jede über einen Kreuzzapfen (7, 8) mit einer entsprechenden Gabel (19, 20 ; 34, 37) verbunden ist, von denen jede aus einem gerollten und geschweißten Blechzuschnitt oder einem Rohr so hergestellt ist, daß jede einstückig das eine bzw. andere eines äußeren (14, 29) und inneren (15, 30) Teils eines Zwischenverbindungsglieds (9) bildet, die miteinander durch ein zwischen ihnen liegendes elastisches Element (16 ; 31) verbunden sind und die mit Anschlagmitteln (22, 27 ; 36) zur Begrenzung ihrer Relativdrehung versehen sind, dadurch gekennzeichnet, daß diese Drehanschlagmittel durch wenigstens eine axiale Fortsetzung (22 ; 36) gebildet sind, welche auf dem inneren Teil (15 ; 30) vorgesehen und für ein In-Anlage-Kommen an einen Schenkel der Gabel (19 ; 34) des äußeren Teils (14 ; 29), wenn das durch das elastische Element zu übertragende Drehmoment einen bestimmten Wert überschreitet, bestimmt ist.

2. Doppelkardangelenk nach dem vorstehenden Anspruch, dadurch gekennzeichnet, daß es Axialanschlagmittel (24, 25 ; 33, 35) umfaßt, welche dazu bestimmt sind, axiale Relativverschiebungen des inneren Teils (14 ; 29) und des äußeren Teils (15 ; 30) zu verhindern.

3. Doppelkardangelenk nach Anspruch 2, dadurch gekennzeichnet, daß die einen der Axialanschlagmittel durch ein ringförmiges Teil (24 ; 33) gebildet sind, welches an dem von seiner Gabel (19 ; 34) abgewandten Ende des äußeren Teils (14 ; 29) des Verbindungsglieds (9 ; 28) angebracht ist, wobei sich das ringförmige Teil (24 ; 33) dem entsprechenden Ende des inneren Teils (15 ; 30) zugekehrt befindet.

4. Doppelkardangelenk nach einem der Ansprüche 2 und 3, dadurch gekennzeichnet, daß die andere Seite der Axialanschlagmittel durch Schultern (25 ; 35) der Schenkel der Gabel (19 ; 34) des äußeren Teils (14 ; 29) gebildet sind, welche sich dem entsprechenden Ende des inneren Teils (15 ; 30) zugekehrt befinden.

5. Doppelkardangelenk nach irgendeinem der vorstehenden Ansprüche, dadurch gekennzeichnet, daß es ferner wenigstens ein den Komplementärmomentkräften standhaltendes Relaislager (26 ; 32) aufweist, welches durch ein starres ringförmiges Teil gebildet ist, welches zwischen dem äußeren Teil (14 ; 29) und dem inneren Teil (15 ; 30) des Zwischenverbindungsglieds (9 ; 28) angeordnet und an wenigstens einem Ende des elastischen Elements (16 ; 31) mit einem leichten Spiel zu dem einen von innerem und äußerem Teil angebracht ist.

6. Doppelkardangelenk nach Anspruch 5, dadurch gekennzeichnet, daß für ein Verbindungsglied (9) mit nicht-kreisförmigem Querschnitt das das Relaislager bildende ringförmige Teil (26) Zurückstände (27) aufweist, welche dem inneren Teil (15) eine begrenzte Winkelverschiebung bezüglich des äußeren Teils (14) erlauben.

FIG.2

18 17 15 14 16

FIG.1

23 16 2 14 4
24 26 15
3 7 22 4
5 2 6
2 4
1 8 2
24 22
9

FIG.4

14 26 27
15

FIG.3

16 14 25 22
3 7 19 4
15 8
12 13
20
10 22 11

0 093 634

FIG.5

FIG.6

FIG.7